# EUROPÄISCHE PATENTSCHRIFT

(11) **EP 3 664 381 B1**
(45) Veröffentlichungstag und Bekanntmachung des Hinweises auf die Patenterteilung: **15.06.2022**
(21) Anmeldenummer: 19214040.8
(22) Anmeldetag: 06.12.2019
(51) Int. Cl.: H04L 12/28

(54) **ANALYSETOOL ZUR AUSWERTUNG VON BEDARFS- UND AUFZEICHNUNGSDATEN VON BELEUCHTUNGSANLAGEN**
ANALYSIS TOOL FOR EVALUATING DEMAND AND RECORDING DATA OF LIGHTING INSTALLATIONS
OUTIL D'ANALYSE PERMETTANT D'ÉVALUER LES DONNÉES DE BESOINS ET D'ENREGISTREMENT DES INSTALLATIONS D'ÉCLAIRAGE

(30) Priorität: 06.12.2018 DE 102018009603; 15.02.2019 DE 102019103896
(43) Veröffentlichungstag der Anmeldung: 10.06.2020
(73) Patentinhaber: Siteco GmbH, 83301 Traunreut (DE)
(72) Erfinder: Bornemann, Lars, 83254 Breitbrunn (DE); König, Christian, 84558 Kirchweidach (DE)
(74) Vertreter: Schmidt, Steffen

(56) Entgegenhaltungen:
- EP-A1- 3 308 227
- DE-A1-102016 110 456
- US-A1- 2016 212 576
- US-A1- 2017 038 753

## Beschreibung

### BESCHREIBUNG

Die vorliegende Erfindung betrifft allgemein das Gebiet von Gebäudeinstallationsanlagen, worunter insbesondere Beleuchtungsanlagen sowie ggf. weitere zusätzliche Gebäudetechnik im Gebäude, in gebäudenahen Bereichen sowie in Außenbereichen des Gebäudes, verstanden wird. Insbesondere betrifft die Erfindung ein Analysetool, welches dazu dient, Daten, die vor, während und nach der Installation der Gebäudeanlage erhoben werden, auszuwerten.

Gebäudeinstallationen, einschließlich der Beleuchtungstechnik, benötigen für größere Bauvorhaben eine umfangreiche Planung. Während des Lebenszyklus der Anlage sind laufende Wartungs- und Reparaturarbeiten die Regel. Schließlich stellt bei einem Rückbau der Gebäude sogar die Entsorgung ein kompliziertes Unterfangen dar, zu welchem die spezifischen Anlagenparameter bekannt sein müssen. Derzeit sind viele nicht miteinander vernetze Arbeitsschritte notwendig, um das unterschiedliche Wissen für die Planung der Gebäudetechnik, die Wartung und Entsorgung durchzuführen. Ein Problem besteht bereits darin, dass viel Wissen und Information zu einer Anlage über den laufenden Betrieb verloren geht und viel Klärungsbedarf zwischen den einzelnen Personen, welche die Anlage planen und betreiben, notwendig ist. Die Folge sind zeitaufwendige Notizen während der anfänglichen Planungsphase. Wenn die Anlage nicht so funktioniert, wie sie soll, sind häufig auch Streitigkeiten zwischen dem Hersteller der Anlage und dem Betreiber der Anlage zu erwarten. Wenn keine lückenlose Dokumentation der Anlage während des Betriebs vorliegt, ist häufig nicht zu klären, ob ein Planungsfehler oder ein Fehler beim Betrieb der Anlage vorlag. Schließlich ist sogar die Entsorgung der Anlage schwierig, weil nach Erreichen der Lebensdauer der Anlage häufig keine Dokumentation mehr vorhanden ist, um feststellen zu können, welche Komponenten verbaut worden sind und wie diese fachgerecht zu entsorgen sind.

US 2017/038753 A1 offenbart ein System und ein Verfahren zum Überwachen eines Gebäudeinstallationssystems. Sensordaten werden aufgezeichnet und mit Leistungsparametern der Anlage verglichen. Ggf. wird bei Abweichung der Leistungsparameter auch ein Alarm ausgelöst.

DE 10 2016 110 456 A1 offenbart ein Kommissionierungsverfahren für eine Gruppierung und Zuordnung von Sensoren und Aktoren eines Gebäudeautomatisierungssystems.

Aufgabe der vorliegenden Erfindung ist es, ein Beratungs- und Analysetool für Systeme der Gebäudetechnik bereitzustellen, welches die Planung und den Betrieb einer Anlage zur Gebäudetechnik unterstützt.

Gelöst wird die Aufgabe durch ein Verfahren zur computergestützten Auswertung von Bedarfs- und Aufzeichnungsdaten an der Gebäudeinstallation gemäß Anspruch 1, sowie durch ein Computerprogramm nach Anspruch 14 und eine elektronische Vorrichtung nach Anspruch 15.

Ein Vorteil des computergestützten Auswertungsverfahrens der vorliegenden Erfindung besteht darin, dass über den gesamten Lebenszyklus einer Anlage der Gebäudeinstallation, d.h. bereits vor Beginn der Installation der Anlage bis zum Ende des Betriebes ein einzelnes computergestütztes Tool verwendet wird, um die Bedarfsdaten zu erfassen und die Betriebsdaten aufzuzeichnen. Dazu ist vorgesehen, dass alle Bedarfsdaten bereits vor Einrichten der Anlage erfasst werden und daraus die Spezifikationen für die Gebäudeinstallation ermittelt werden. Dies erfolgt computergestützt durch eine Software, welche die notwendigen Planungsdaten über eine Benutzerschnittstelle geführt abfragt. Zusätzlich werden erfindungsgemäß bereits Sensormessungen in dem Planungsstadium vorgenommen. Beispielsweise können Lichtverhältnisse durch Tageslicht im Bereich der geplanten Gebäudeinstallation, typische Bewegungsmuster von Personen und Kraftfahrzeugen im Bereich der Gebäudeinstallation sowie Temperatur- und Umwelteinflüsse aufgezeichnet werden. Alle diese Planungsdaten werden analysiert und darum sinnvolle Spezifikationen für die Gebäudeeinrichtung ermittelt. Diese Spezifikationen werden gespeichert und während des laufenden Betriebs der Anlage mit Sensordaten von Sensoren, die als Teil der Anlage installiert sind und laufend Messdaten aufzeichnen und weitergeben, verglichen. Daraus kann in vorteilhafter Weise während des Betriebs der Anlage überprüft werden, ob die Anlage auch die vorher definierten Spezifikationen erfüllt. Ferner kann während des Betriebs der Anlage auch auf Änderungen reagiert werden. Wenn beispielsweise festgestellt wird, dass die Durchschnittstemperatur in einer Produktionshalle höher als ursprünglich geplant ist oder die durch einen Bewegungssensor ausgelösten Einschaltzeiten einer Leuchte viel größer ist als ursprünglich geplant war, können entsprechend die Gebäudeinstallationen nach der Erstinstallation verändert werden. Alle notwendigen Ergebnisse der Analyse stehen sowohl dem Betreiber der Anlage als auch dem Hersteller der Anlage sowie den Kundendienstmitarbeitern zur Verfügung, da sie in einem Datenfile vorzugsweise in einer Datenbank einer Cloud gespeichert werden.

Gemäß einer bevorzugten Ausführungsform erheben die Sensoren wenigstens einige der folgenden Messdaten: Umgebungsbedingungen, insbesondere Temperatur, Feuchtigkeit und/oder mechanische Erschütterung; Beleuchtungsstärke, insbesondere die durch Tageslicht und/oder künstliches Licht erzeugte Beleuchtungsstärke; Bewegungsdaten von Personen und/oder Kraftfahrzeugen, die sich im Bereich der Gebäudeinstallation aufhalten; Stabilität eines Versorgungsnetzwerkes; und Signalqualität von Datenkommunikationseinrichtungen. Diese Daten werden üblicherweise zur Planung einer Gebäudeinstallation berücksichtigt. Das Aufzeichnen der Daten ermöglicht es daher, den ordnungsgemäßen Betrieb der Anlage zu überwachen. Teilweise werden die Daten ohnehin aufgezeichnet, um den laufenden Betrieb der Anlage zu gewährleisten. Beispielsweise werden Bewegungsdaten von Personen und Kraftfahrzeugen erfasst, um Leuchten ein- bzw. auszuschalten. Eine Besonderheit besteht jedoch darin, dass diese Daten auch erfasst werden, um den ordnungsgemäßen Betrieb der Anlage zu überwachen. Beispielsweise kann festgestellt werden, dass eine Umgebungstemperatur viel höher ist, als ursprünglich geplant war. Dann ist mit einem vorzeitigen Ausfall der entsprechenden Gebäudeanlage zu rechnen. Aus den Bewegungsdaten, welche ohnehin erhoben werden, um z.B. Beleuchtungsanlage ein- und auszuschalten, kann ermittelt werden, ob die Schaltfrequenz höher als geplant ist. Auch dann ist mit einem vorzeitigen Ausfall der Anlage zu rechnen und müssen daher früher ausgetauscht werden. Bei Störungen der Stabilität des Versorgungsnetzwerkes oder bei Störungen der Signalqualität bei der notwendigen Datenkommunikation sind ggf. die für die Gebäudeeinrichtung vorgesehenen Notprogramme an die veränderte Situation anzupassen.

Gemäß einer bevorzugten Ausführungsform umfasst das Analysieren ein Vergleichen von mit dem Sensor erhobenen Umgebungsbedingungen mit einem in den Planungsdaten für den betreffenden Ort des Sensors spezifizierten maximalen Bereich der entsprechenden Umgebungsbedingungen. Die Erhebung dieser Daten dient nicht nur dazu, um einen vorzeitigen Ausfall von Geräten der Gebäudeinstallation vorherzusagen. Sie können auch vom Hersteller der Anlage benutzt werden, um Regressansprüche vom Betreiber abzuwehren, wenn die Angaben des Betreibers der Anlage vor Installation nicht korrekt waren.

Gemäß einer bevorzugten Ausführungsform umfasst das Analysieren ein Vergleichen des Energieverbrauchs der Gebäudeinstallation oder Teilen von dieser mit einem in den Planungsdaten spezifizierten maximalen Energieverbrauch der Gebäudeinstallation oder der betreffenden Teile der Gebäudeinstallation. Die systematische Auswertung des Energieverbrauchs von einzelnen Energieverbrauchern der Gebäudeinstallation oder Teilen der Gebäudeinstallation ermöglicht es, ein effizientes Energiemanagement zu betreiben. Es kann analysiert werden, wo technisch aufwendigere Lösungen zur Nutzung des Tageslichts rentabel sind. Allerdings kann auch festgestellt werden, dass die vom Betreiber der Anlage ursprünglich festgelegten Betriebszeiten überschritten werden, so dass nachvollzogen werden kann, warum die Anlage einen zu hohen Gesamtenergieverbrauch aufweist.

Gemäß einer bevorzugten Ausführungsform umfasst das Analysieren ein Feststellen einer Fehlfunktion einer Komponente der Gebäudeinstallation, insbesondere einem Ausfall einer Komponente der Gebäudeinstallation. Bei einer detektierten Fehlfunktion kann direkt das entsprechende Ersatzteil bestellt werden. Eine aufwendige Fehlersuche vor Ort entfällt.

Gemäß einer bevorzugten Ausführungsform sieht das Verfahren nach dem Analysieren vor, eine elektronische Benachrichtigung zu erzeugen, welche an einen Betreiber der Gebäudeinstallation, an einen Hersteller der Gebäudeinstallation und/oder an einen Servicetechniker für die Gebäudeinstallation versendet wird. Insbesondere kann die elektronisch erzeugte Nachricht an den Betreiber, Hersteller und Servicetechniker jeweils unterschiedliche Inhalte aufweisen. Die für den Betreiber, den Hersteller und den Servicetechniker relevanten Informationen sind durchaus unterschiedlich. Während der Betreiber der Anlage insbesondere wissen möchte, ob die Anlage entsprechend der vorher festgestellten Spezifikationen störungsfrei arbeitet, ist für den Hersteller wichtig, ob die Anlage auch entsprechend vorhergehend festgelegten Planungsdaten betrieben wird. Für den Servicetechniker ist es wichtig, direkt Informationen über anstehende Wartungsarbeiten und die notwendigen Bestellinformationen für auszutauschende Teile der Anlage zu erhalten.

Gemäß einer bevorzugten Ausführungsform umfasst wenigstens eine der elektronischen Benachrichtigungen eine Empfehlung für den Austausch einer Komponente der Gebäudetechnik und/oder eine Veränderung eines Serviceintervalls einer Komponente der Gebäudetechnik.

Gemäß einer bevorzugten Ausführungsform umfasst die Benachrichtigung eine Identifikation des Typs und/oder des Ortes der betreffenden Komponente.

Gemäß einer bevorzugten Ausführungsform umfasst die Benachrichtigung einen Hinweis darauf, dass ein Sensor wenigstens zeitweise eine Abweichung der gemessenen Umgebungsbedingungen von dem in den Planungsdaten spezifizierten maximalen Bereich umfasst.

Gemäß einer bevorzugten Ausführungsform umfasst das Analysieren eine statistische Analyse von Sensordaten, um das Auftreten von Messdaten außerhalb einer statistischen Bandbreite festzustellen. Das Analysieren der statistischen Abweichungen kann einen Selbstlernprozess beinhalten, so dass eine der statistischen Auswertung zu Grunde gelegte Bandbreite über den laufenden Betrieb der Gebäudeinstallation auf Grundlage der vorhergehenden Messdaten angepasst wird. Beispielsweise kann durch eine statistische Auswertung der Daten, ein Grund für eine Fehlfunktion festgestellt werden. Wenn beispielsweise ein Bewegungssensor ständig scheinbar viel zu häufige Bewegungen meldet und gleichzeitig in dem selben Zeitraum eine höhere Temperatur durch ein Belüftungsgerät festgestellt wird, kann daraus geschlossen werden, dass die Temperatur des Belüftungsgerätes eine Fehlfunktion in dem Bewegungsmelder hervorruft. Die Qualität einer solchen, durch statistische Auswertung festgestellten Fehler, kann durch den Selbstlernprozess laufend verbessert werden. Das System erkennt selbst, welche atypischen Messdaten von Sensoren voraussichtlich eine Fehlfunktion eines benachbarten Gerätes zur Folge haben, um vor einem Ausfall des betreffenden Gerätes früher zu warnen.

Gemäß einer bevorzugten Ausführungsform werden die Planungsdaten, die Spezifikationen, die Sensordaten, die Ergebnisse des Analysierens und/oder die versandten Benachrichtigungen in einem einzelnen Datenfile gespeichert. Ein Vorteil dieser Ausführungsform besteht darin, dass alle Daten über den gesamten Lebenszyklus in einem Datenfile lückenlos aufgezeichnet werden. Dadurch erhöht sich die Möglichkeit, Fehlervorhersagen aus statistischen Daten zu ermitteln, wie vorhergehend ausgeführt. Ferner sind zur Forderung von Garantieansprüchen oder zur Abwehr von Regressansprüchen die notwendigen Daten, welche derartige Ansprüche für den Betreiber bzw. den Hersteller der Anlagen belegen können, jederzeit verfügbar. Ferner sind bei einem Rückbau oder einem Teilrückbau der Anlage noch alle Informationen enthalten, die ein fachgerechtes Entsorgen der Systemkomponenten oder ggf. ein Recycling der Komponenten der Gebäudeinstallation ermöglichen. Wenn beispielsweise festgestellt wird, dass ein Teil der Gebäudeinstallation aufgrund des Abrisses des Gebäudes bereits zurückgebaut werden muss, lange bevor die Lebenserwartung der Geräte erreicht ist, ist es möglich, auch eine Weiterverwendung der Geräte zu planen. Fernern sind alle Informationen über den Typ der verbauten Geräte gespeichert, so dass jederzeit ein geeignetes Ersatzgerät wiederbeschafft werden kann.

Weitere Vorteile und Merkmale der vorliegenden Erfindung werden aus der nachfolgenden Beschreibung bevorzugter Ausführungsformen deutlich, die in Verbindung mit den beigefügten Figuren gegeben wird. In den Figuren ist Folgendes dargestellt:
- Figuren 1a: bis 1i zeigen Benutzerschnittstellen einer Software zur Erhebung von Planungsdaten einer Gebäudeinstallation, und
- Figur 1j: zeigt ein Ablaufdiagramm einer Software zur Erhebung der Planungsdaten in einer Neu- und Bestandsanlage.
- Figuren 2a: bis 2c zeigen Ablaufdiagramme einer Software zum Analysieren von Sensordaten betreffend die Signalqualität an Schnittstellen.
- Figuren 3a: bis 3c zeigen Ablaufdiagramme einer Software betreffend das Analysieren von Temperaturprofilen.
- Figur 4: zeigt ein Ablaufdiagramm einer Software zur Analyse von Störsignalen.
- Figur 5: zeigt ein Ablaufdiagramm einer Software zur Analyse von Daten aus Orts- und Bewegungssensoren.
- Figur 6: zeigt ein Ablaufdiagramm eine Software zur Analyse von Daten aus Sensoren, welche Bewegungseinflüsse messen.
- Figur 7: zeigt ein Ablaufdiagramm einer Software zur Aufzeichnung von Messwerten einer Vielzahl von Sensoren.
- Figur 8: zeigt ein Ablaufdiagramm einer Software zur Behandlung von Kundenreklamationen.
- Figur 9: zeigt ein Ablaufdiagramm einer Software zur Verarbeitung von Daten aus Bewegungssensoren.
- Figur 10: zeigt ein Ablaufdiagramm einer Software zur Sensorauswahl.

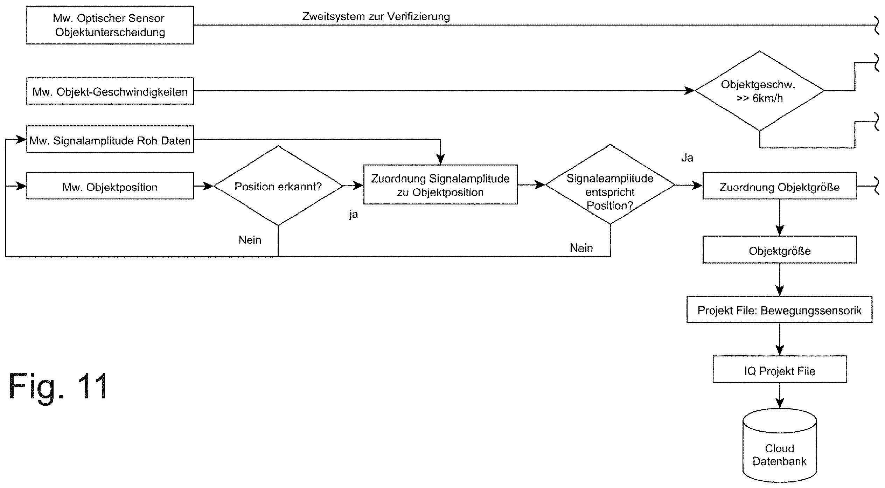

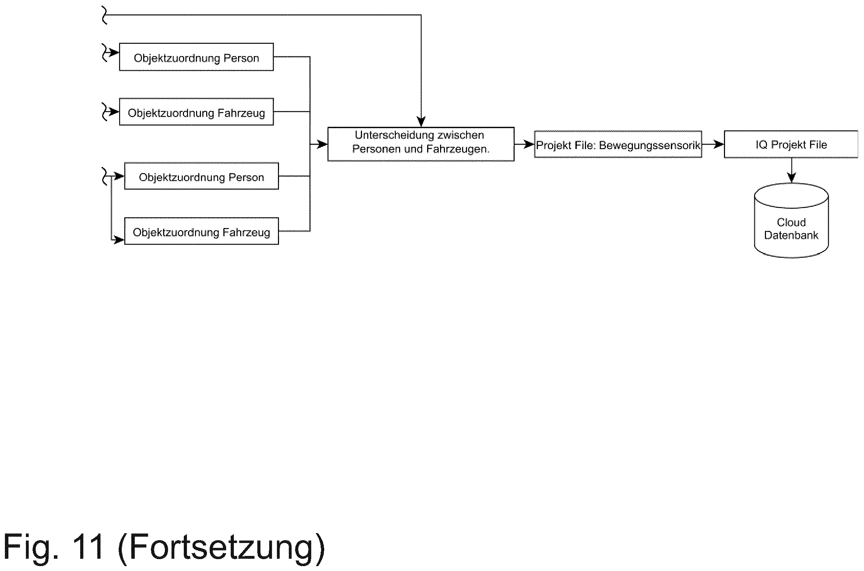

- Figur 11: zeigt ein Ablaufdiagramm einer Software zur Analyse von Daten aus Objekterkennungs- und Bewegungssensoren.

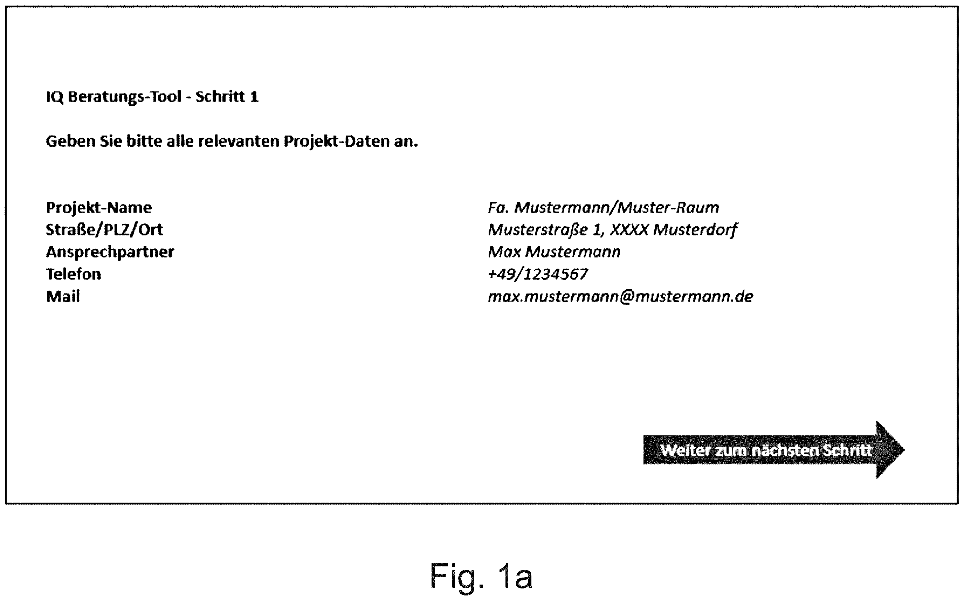

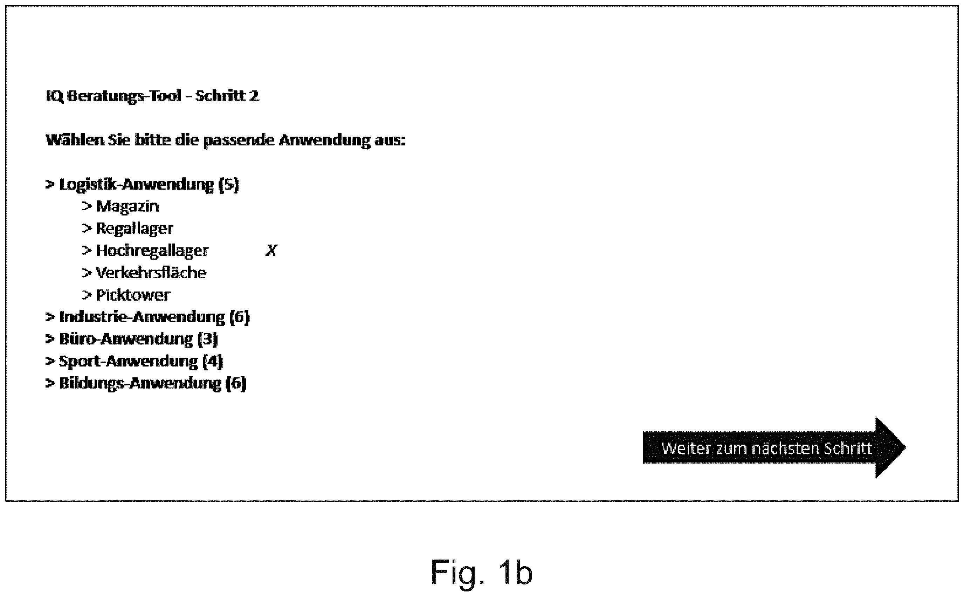

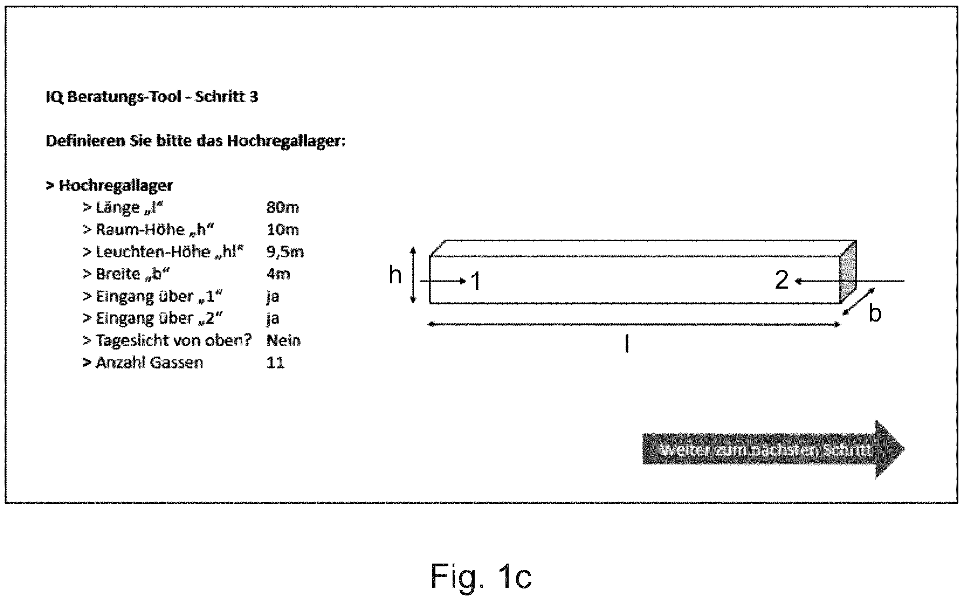

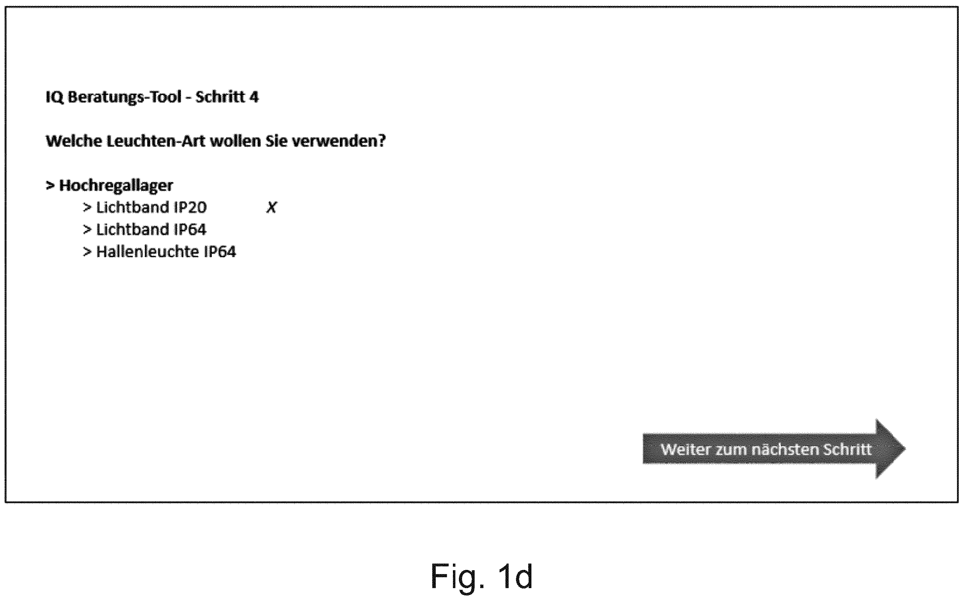

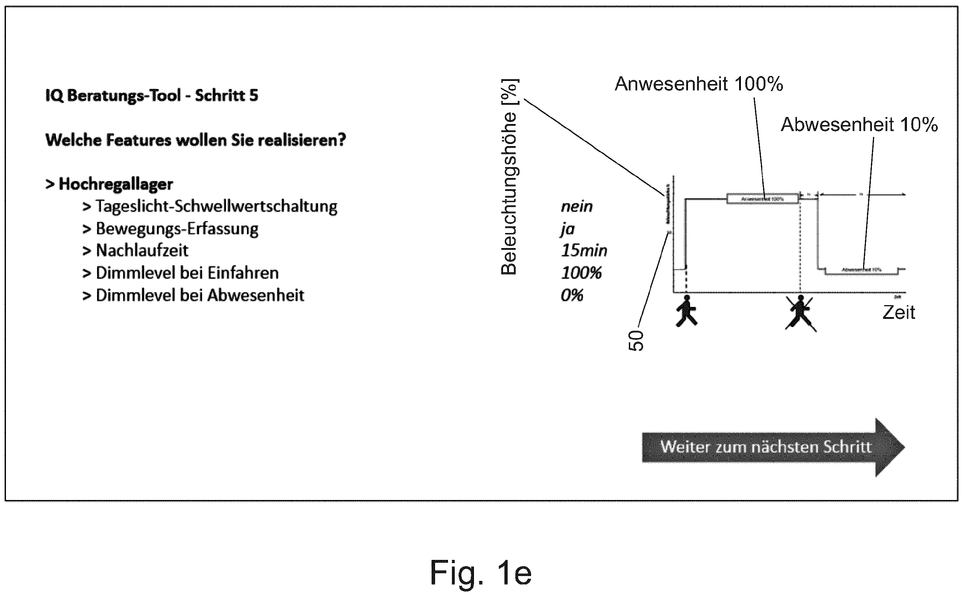

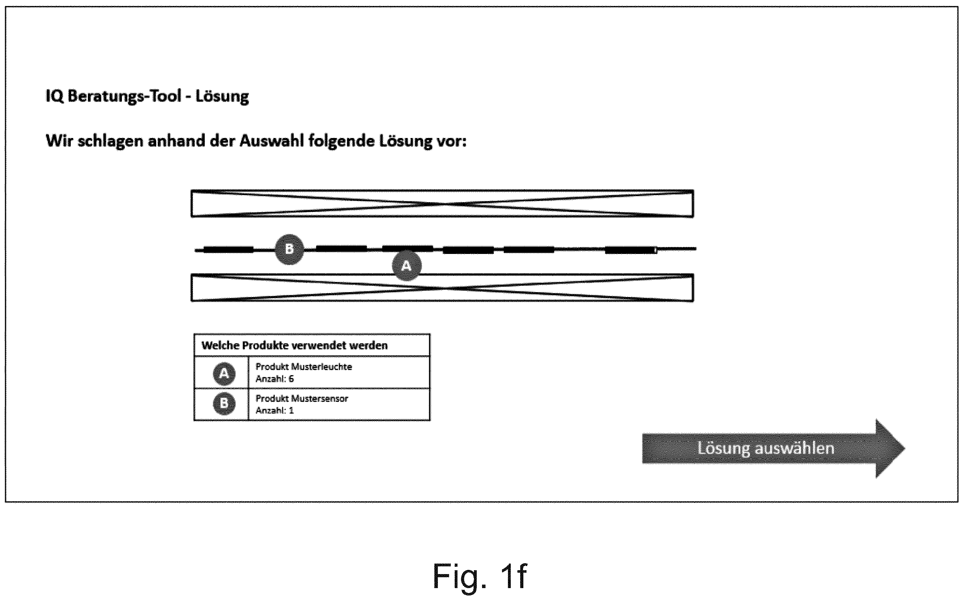

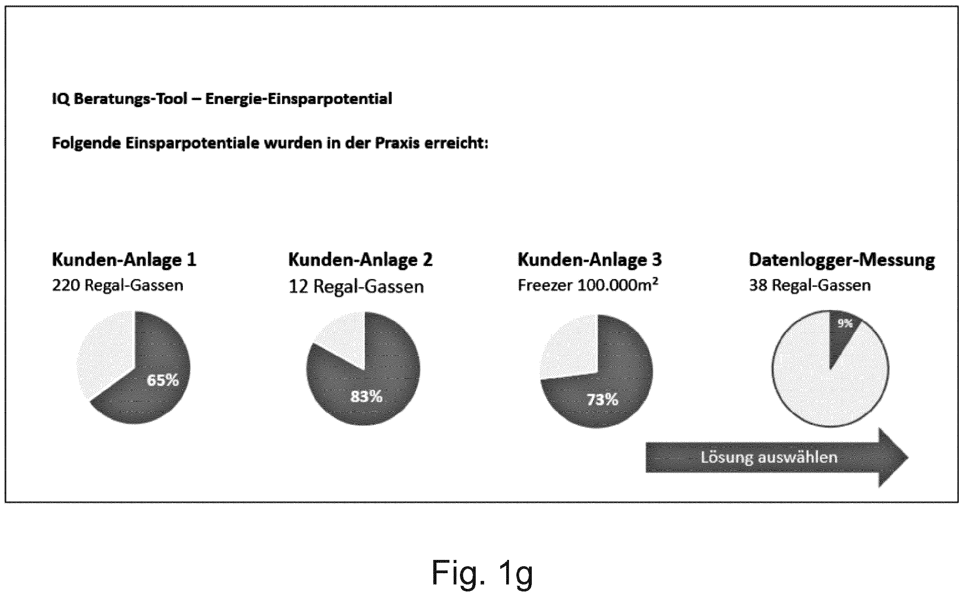

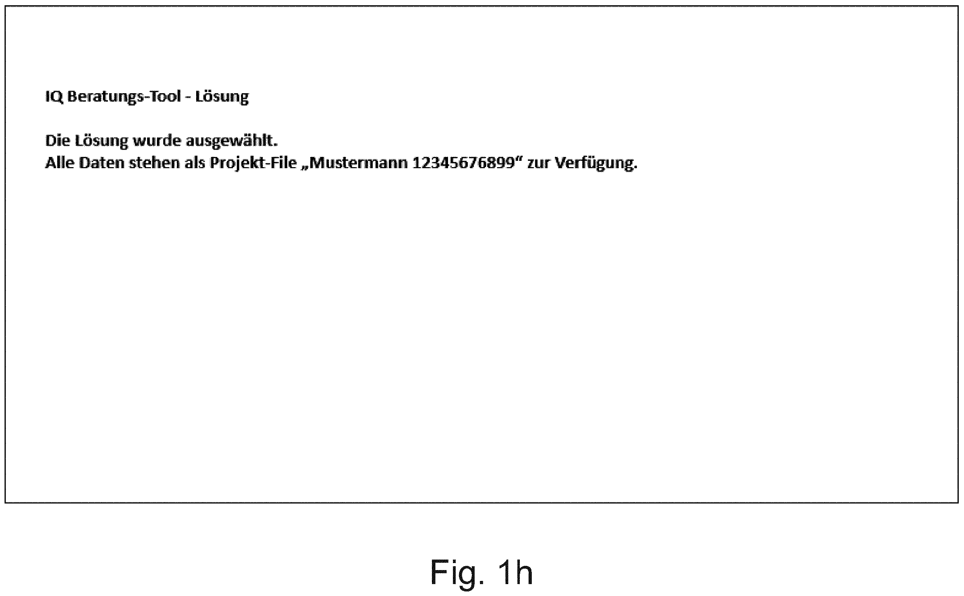

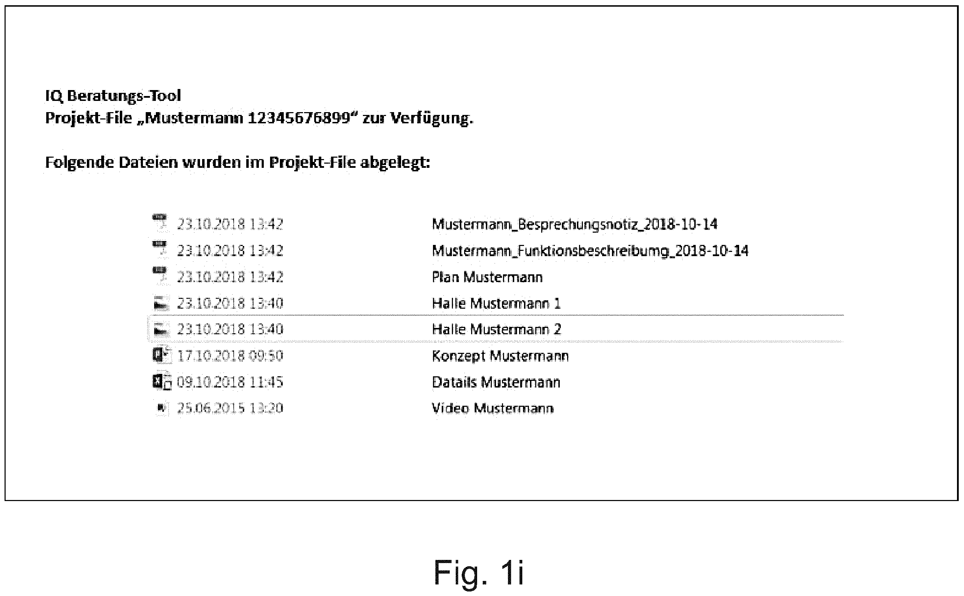

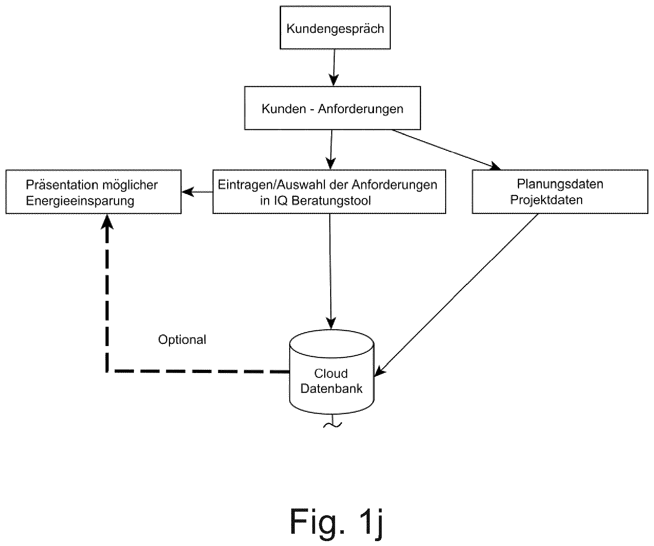

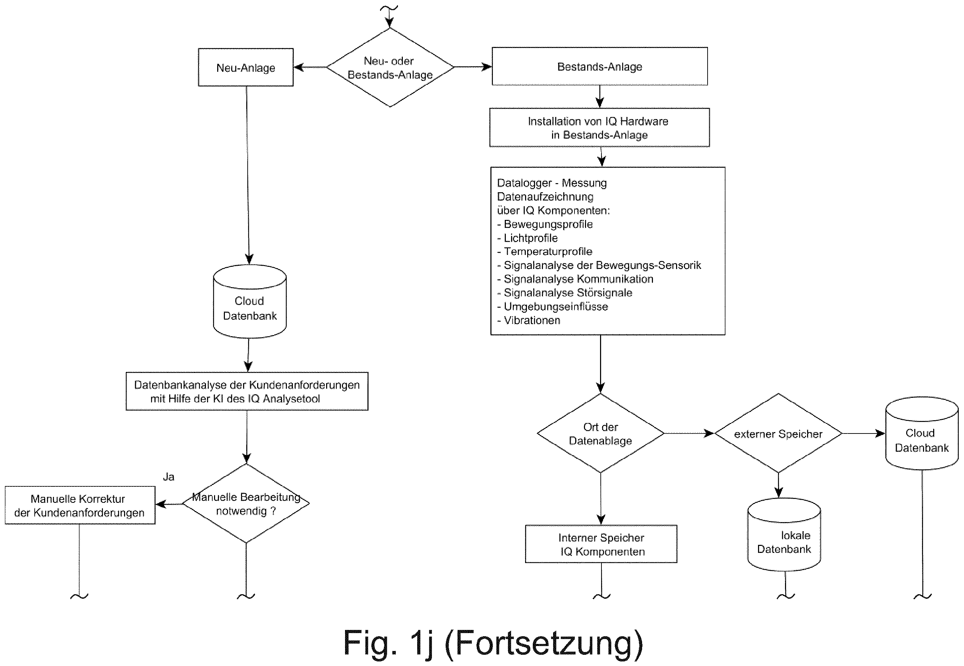

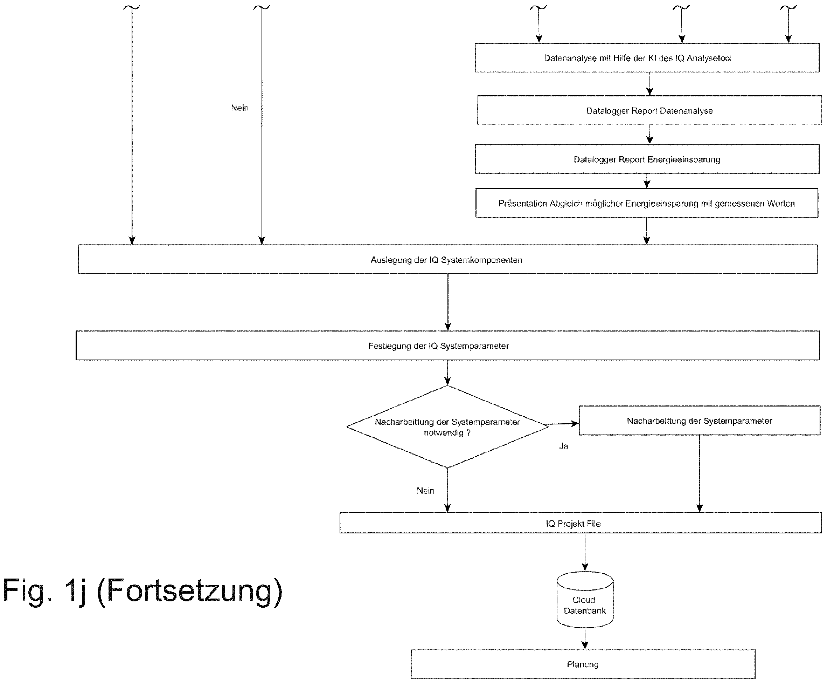

Bezugnehmend auf die Figuren 1a bis 1i wird eine Benutzerschnittstelle beschrieben, die gemäß einer Ausführungsform der Erfindung zur Erhebung von Planungsdaten eine Gebäudeinstallation vor Einrichtung der Installation verwendet werden kann. Ein Beratungs-Tool fragt schrittweise Daten für die Planung einer Beleuchtungsinstallation in einem Gebäude ab. In dem vorliegenden Beispiel wird nach Erfassung der Projektdaten, wie die Adresse und die Kontaktdaten des Kunden (siehe Figur 1a) abgefragt, welche Art von Gebäuden mit Beleuchtungseinrichtungen ausgerüstet werden sollen (siehe Figur 1b). Im nächsten Schritt wird die Bemaßung der Räume festgelegt (siehe Figur 1c) und die notwendige Schutzklasse der Leuchten (siehe Figur 1d) abgefragt. Schließlich werden noch weitere Merkmale festgelegt, welche die automatische Schaltung der Leuchte, z.B. durch Tageslicht-Schwellwertschaltung und durch Bewegungserfassung, betreffen. Darin werden auch die Nachlaufzeiten sowie die Dimm-Level für die Leuchte festgelegt (siehe Figur 1e). Auf Grundlage dieser Rahmenparameter ermittelt die Software automatisch einen Vorschlag für die Beleuchtungseinrichtungen in dem betreffenden Gebäude und deren Anordnung innerhalb des Gebäudes (siehe Figur 1f) und gibt ein voraussichtlich zu erzielendes Energie-Einsparpotenzial aus (siehe Figur 1g). Die ermittelten Daten werden in einem Projekt-File abgelegt und sind in diesem File unter der Projektbezeichnung abrufbar (siehe Figuren 1h und 1i) . Wichtig ist dabei anzumerken, dass die einmal erfassten Daten dauerhaft gespeichert werden und über den gesamten Lebenszyklus der Anlage erhalten bleiben. Das Datenfile ermöglicht daher eine Dokumentation der relevanten technischen Daten über die Planungsphase hinaus. Während der Planungsphase können die bei der Beratung erhobenen Daten sowie ggf. weiter Datenlocker-Messungen und sämtliche Informationen, die für die Planung relevant sind, in die Planung einbezogen werden. Ferner ist berücksichtigt, dass auch Informationen aus anderen Daten-Files von bereits durchgeführten Projekten zur manuellen oder automatischen Planung herbeigezogen werden können. Hierzu werden alle notwendigen Informationen aus einer Datenbank, welche das Daten-File speichert, von allen an dem Projekt beteiligten Personen bezogen. Ein Ablaufdiagramm eines Computerprogramms, welches zur Erhebung der Planungsdaten in einer Neu- und Bestandsanlage verwendet werden kann, ist in Figur 1j dargestellt. Die Speicherung des Daten-Files kann erfolgen, wie in der deutschen Patentanmeldung mit dem Titel "Projektfile für Beleuchtungsanlagen" der gleichen Anmelderin mit demselben Anmeldetag beschrieben ist. Nach Bedarf ist auch eine Übersetzung in eine andere Sprache möglich, so dass die Bearbeitung auch an einem anderen Standort oder in einem anderen Land stattfinden kann.

Bei der Planung werden entsprechend dem Planungsprogramm jedem Betriebsmittel eine eindeutige Kennzeichnung zugewiesen. Auch die Betriebsmittelkennzeichnung wird in dem Datenfile automatisch gespeichert. Sie können im nächsten Schritt der Bestellphase der Anlage Verwendung finden. Vorzugsweise wird aus dem Daten-File eine Stückliste erstellt, welche die exakten Angaben der Anzahl und des Typs der benötigten Beleuchtungseinrichtungen sowie ggf. weitere Sensorik oder anderer Gebäudetechnik umfasst. Eine Verbindung zu einem Warenwirtschafts-System kann automatisch hergestellt werden. Ferner kann eine Beschreibung des Leistungsumfangs ausgegeben werden. Darin sind alle Produkte, Anlagen, Funktionen, Garantieleistungen und Montage- und Betriebnahmeleistungen aufgelistet. Die Daten sind sowohl für den Kunden der Anlage als auch für den Anbieter ersichtlich.

Erfolgt die Bestellung der Produkte aus dem Angebot, werden alle relevanten Daten bei Bedarf an das Warenwirtschaftssystem exportiert, um alle relevanten Einkaufs- und Beschaffungsinformationen zu bekommen. Alle darin abgelegten Informationen zu Produkten und Einstellungen ggf. notwendigen Inbetriebnahme-Dienstleistungen sind auf einen Blick ersichtlich.

Automatisch nach der Bestellung werden mögliche Termine für Service-Dienstleistungen abgestimmt. Alle verfügbaren Service-Mitarbeiter werden automatisch mit Hilfe eines Kalenders ausgesucht. Eine optimale Auslastung des Personals wird dadurch ermöglicht.

Während der Produktion der Produkte der Gebäudeinstallation werden alle notwendigen Daten aus dem Daten-File ausgelesen und die Produkte können beispielsweise mit einem Aufkleber entsprechen markiert werden. Jedes Produkt und sein späterer Installationsort ist damit eindeutig identifizierbar.

Aus dem Daten-File können ferner alle relevanten Informationen zur Parametrisierung der Anlage abgelesen werden. Beispielsweise können die vorher spezifizierten An- und Ausschaltzeiten sowie Nachlaufzeiten und Dimm-Level an dem betreffenden Produkt gespeichert werden.

Dies erleichtert die Montage der Produkte durch einen Servicetechniker vor Ort. Aus der Identifikation des Produkts kann unmittelbar auf dem Montageort geschlossen werden. Falls vor oder während der Installation der Anlage noch Änderungen vorgenommen werden, werden diese ebenfalls in dem Daten-File erfasst, so dass auch später jederzeit nachvollziehbar ist, welche Produkte an welchem Ort installiert worden sind.

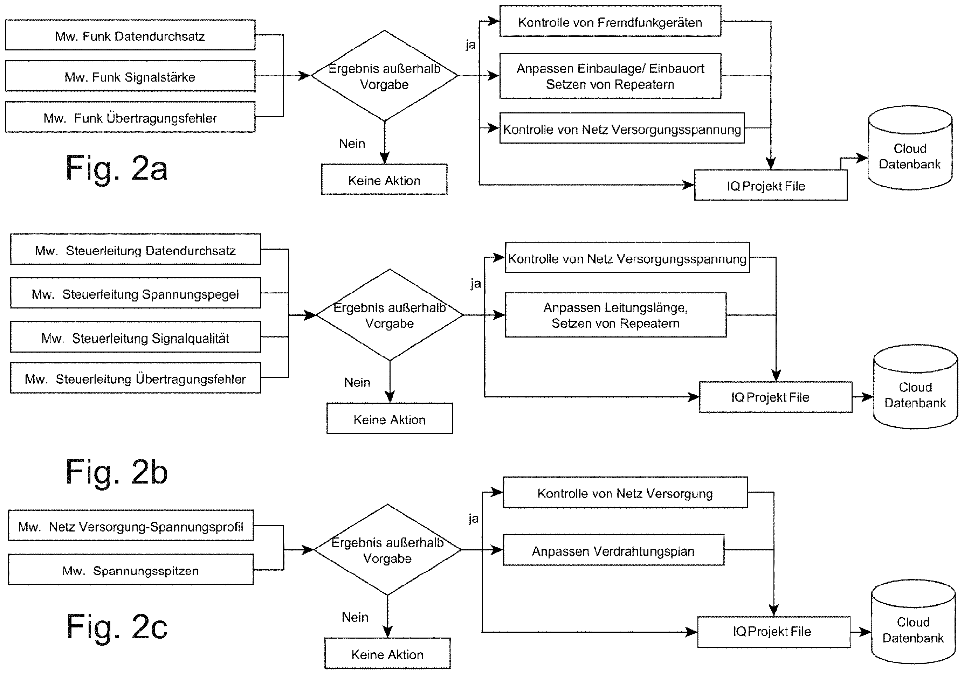

Nach Inbetriebnahme der Anlage können sich die Betriebsgeräte selbst überprüfen und einen aktuellen Fehlerzustand melden, welcher ebenfalls in das Daten-File abgelegt wird. Auf diese Weise können geeignete Maßnahmen durch Servicetechniker ergriffen werden. Ein Austausch eines defekten Betriebsmittel kann direkt erfolgen. Beispiele für die Erfassung von Messwertdaten, welche auf einen Fehler schließen lassen, sind in den Figuren 2a bis 2c dargestellt. Die Messwerte können insbesondere die Signalqualität der Steuerdaten sowie die Stabilität der Versorgungsspannung umfassen. Bei Feststellen von Ereignissen außerhalb einer Vorgabe werden geeignete Maßnahmen vorgeschlagen. Diese Maßnahmen können in Form einer elektronischen Benachrichtigung direkt an einen Servicetechniker übermittelt werden. Ferner werden auch diese Maßnahmen in dem Projekt-File (sogenanntes IQ-Projekt-File) gespeichert und vorzugsweise in einer Cloud-Datenbank abgelegt.

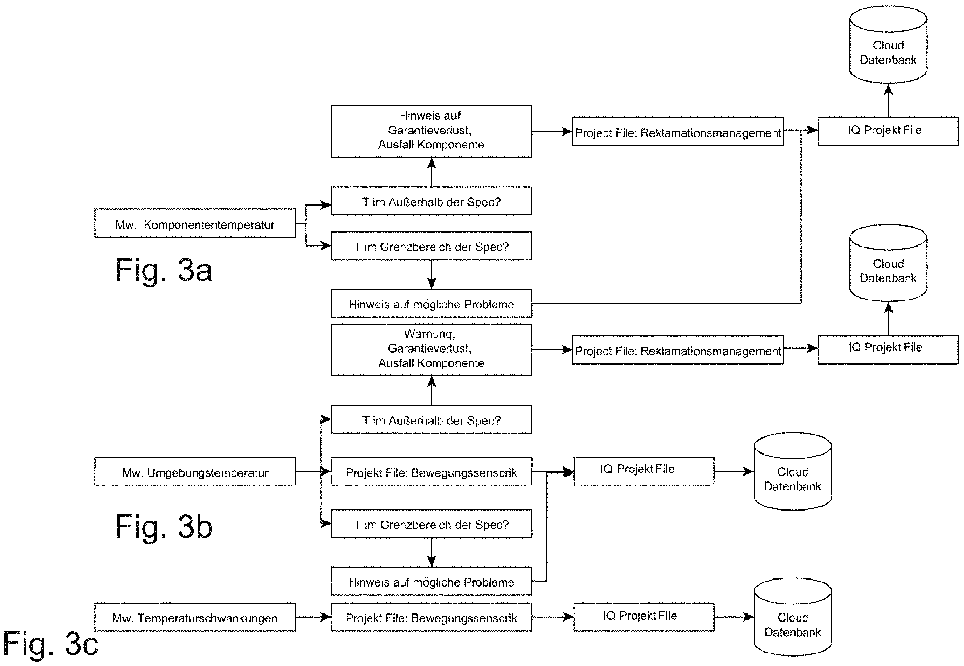

Ferner werden von der Anlage im laufenden Betrieb mit Sensoren innerhalb der Anlage Messdaten ermittelt, z.B. Temperaturen, insbesondere die Temperatur der Komponente selbst, die Umgebungstemperatur sowie Temperaturschwankungen (siehe Figuren 3a bis 3c). Die gemessenen Temperaturen werden vorzugsweise direkt an der betreffenden Netzwerkkomponente ausgewertet, um auf mögliche Probleme Rückschlüsse zu ziehen. Wenn ein Temperaturbereich außerhalb einer vorgegebenen Spezifikation festgestellt wird, wird einerseits auf ein mögliches Problem hingewiesen und andererseits auch auf einen möglichen Garantieverlust bei Ausfall der Komponente aufmerksam gemacht. Alle Daten werden in dem Projekt-File abgelegt, so dass sowohl für den Kunden der Anlage als auch für den Hersteller nachweisbar ist, ob ein aufgetretener Fehler auf einen Betrieb der betreffenden Komponente außerhalb ihrer Spezifikation zurückzuführen ist.

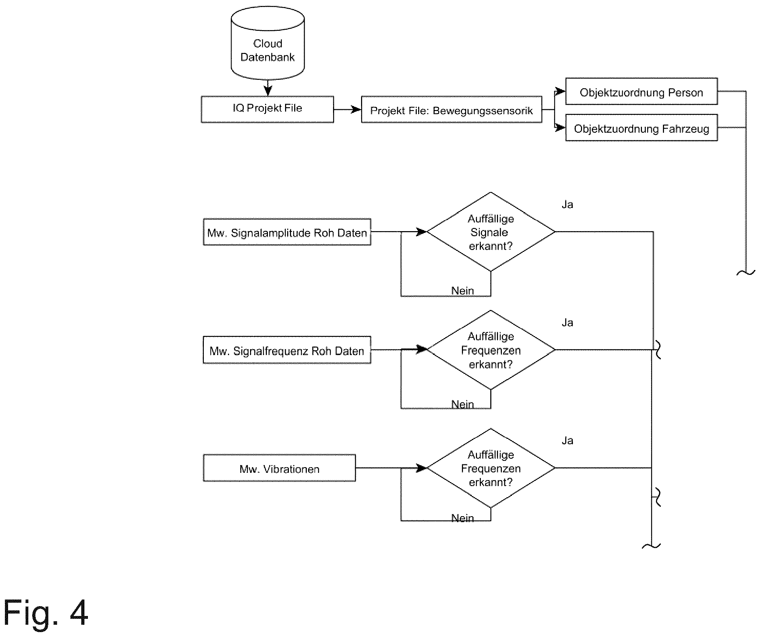

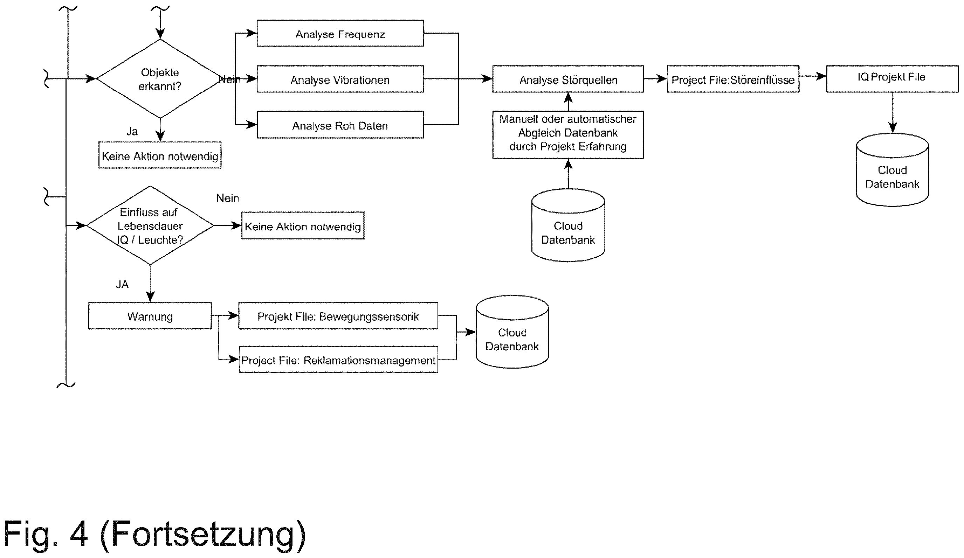

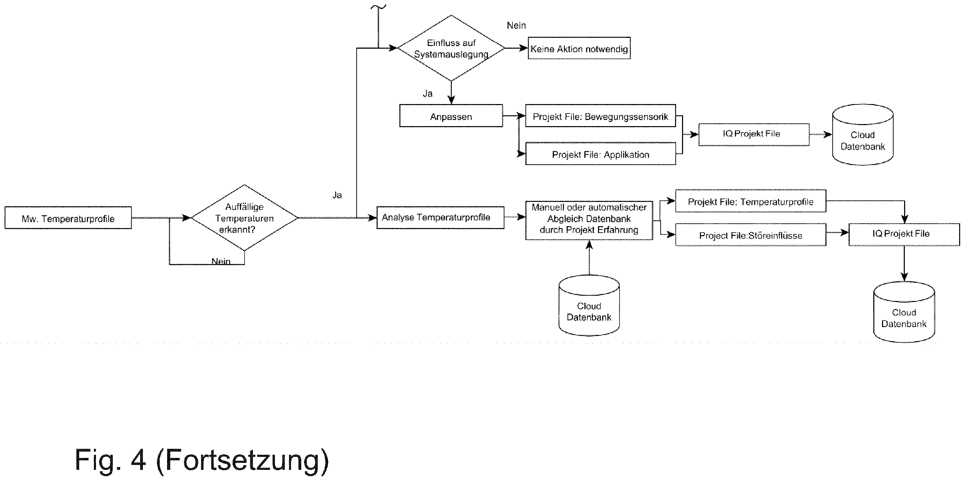

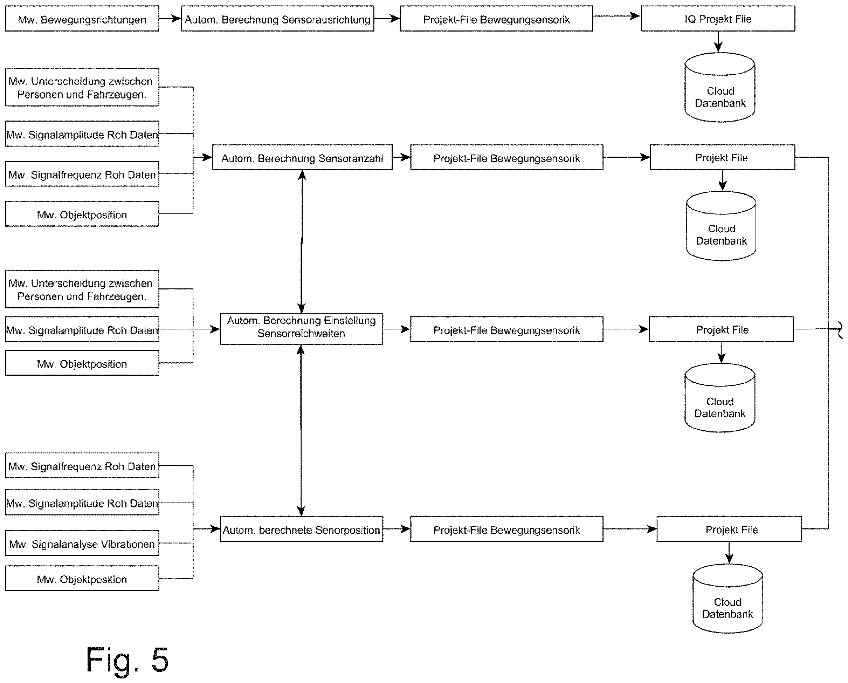

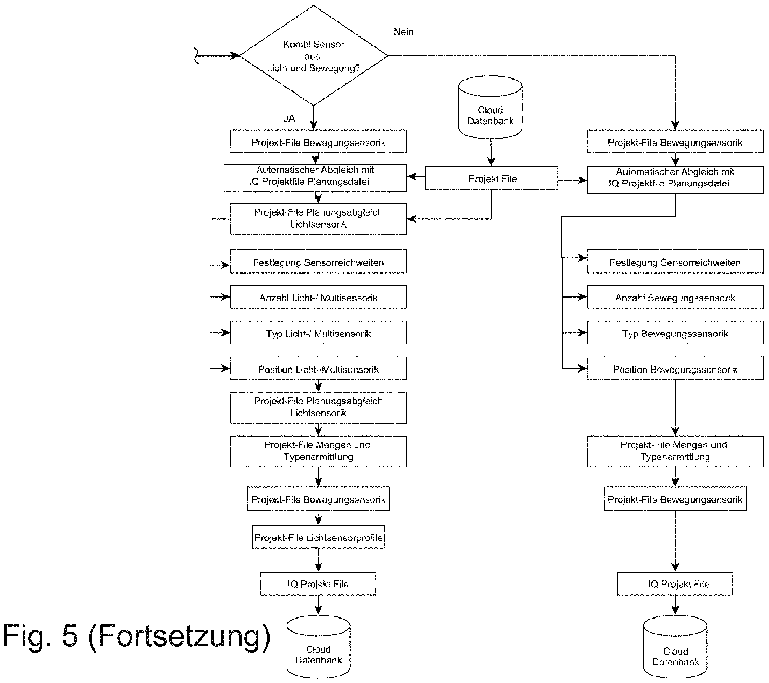

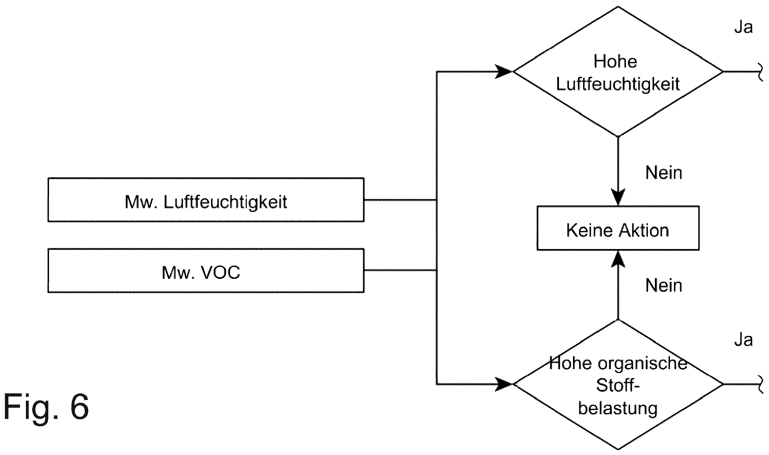

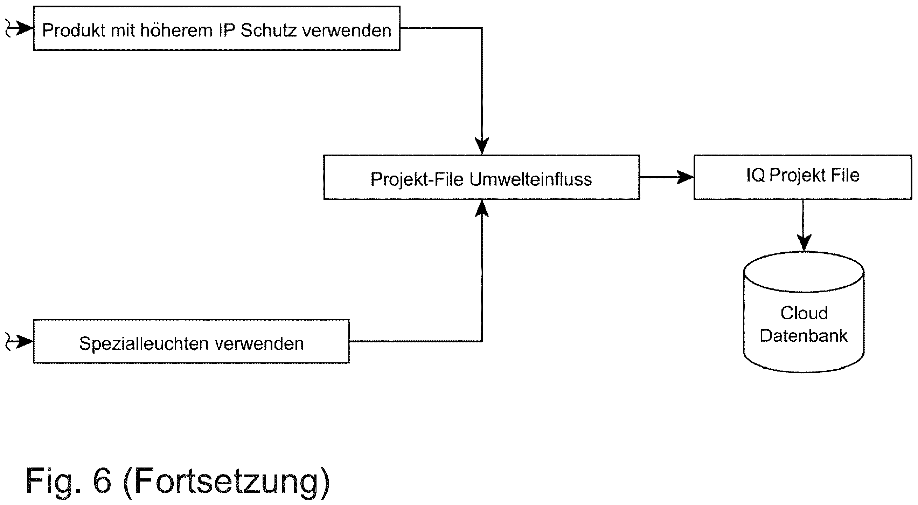

Beispiele für die Fehlererfassung aus auffälligen Messwerten sind in Figur 4 in Hinblick auf Störsignale, in Figur 5 in Hinblick auf Meldungen von Bewegungssensoren und in Figur 6 in Hinblick auf Umgebungsbedingungen, insbesondere Luftfeuchtigkeit und flüchtige organische Verbindungen (VOC), beschrieben.

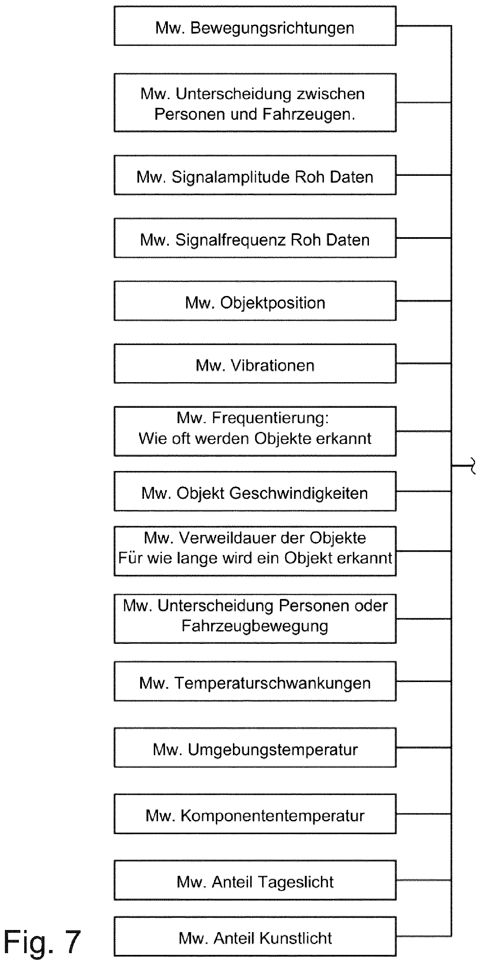

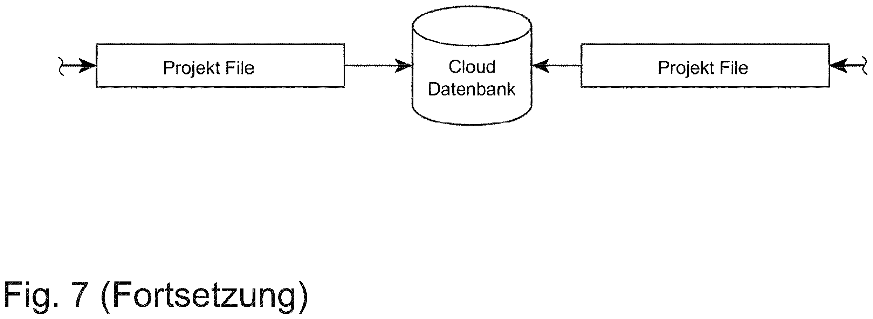

Eine Übersicht von erfassten Messwerten ist in Figur 7 dargestellt.

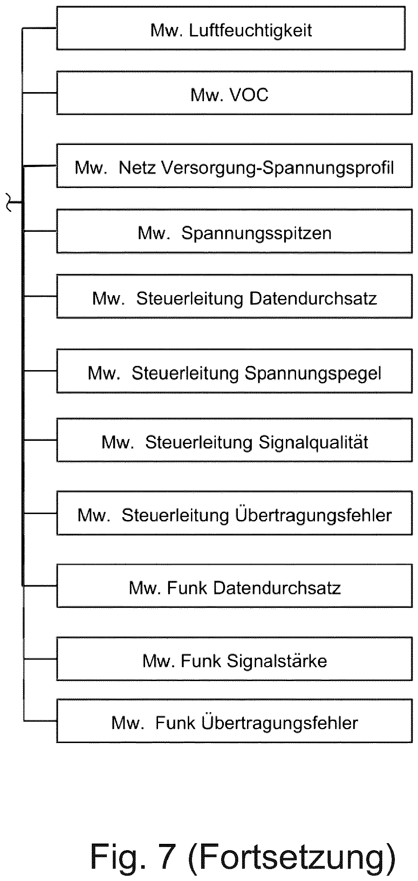

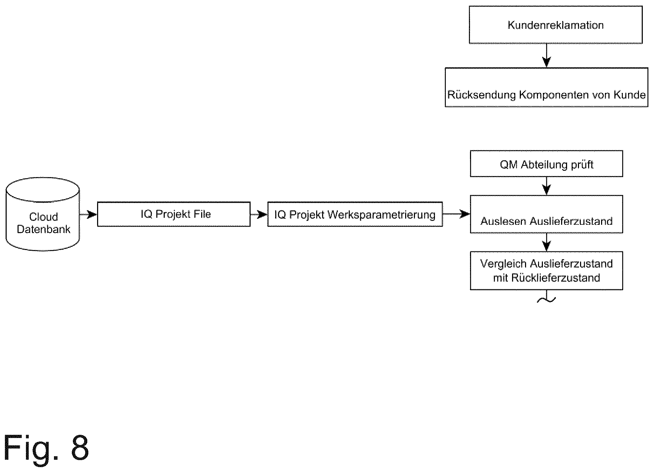

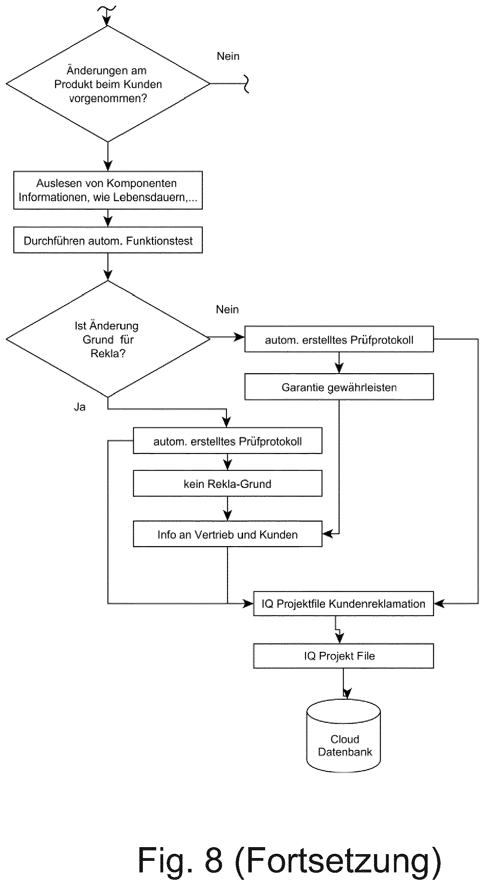

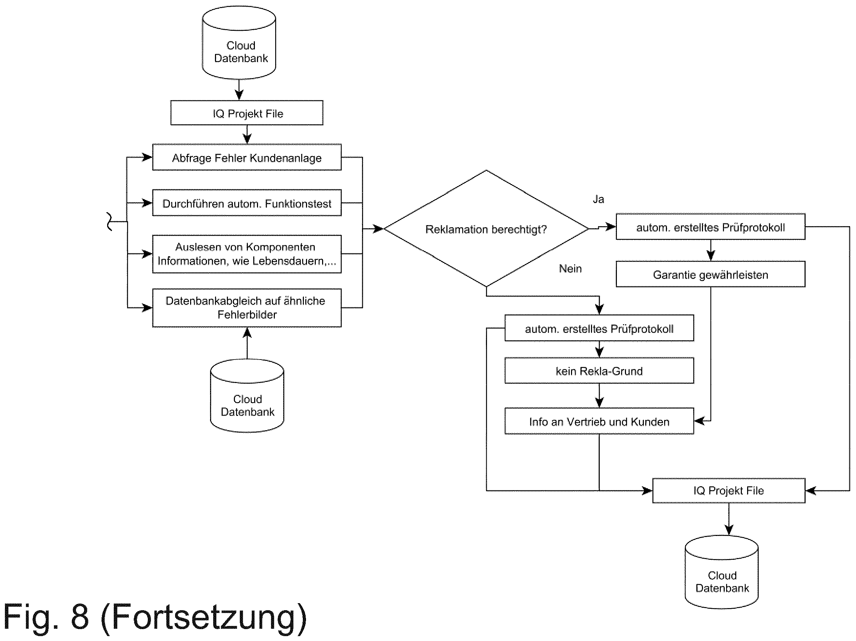

Im Falle einer Kundenreklamation kann aus dem Projekt-File ermittelt werden, wie der Auslieferungszustand der fehlerhaften Komponente war, um festzustellen, ob kundenseitig Änderungen vorgenommen worden sind. Falls kundenseitig eine Änderung vorgenommen worden ist, ohne dass diese vom Hersteller autorisiert war, ist diese Information nützlich, um die Berechtigung der Reklamation zu prüfen. Ein Ablaufdiagramm dieses computergestützten Verfahrens ist in Figur 8 dargestellt.

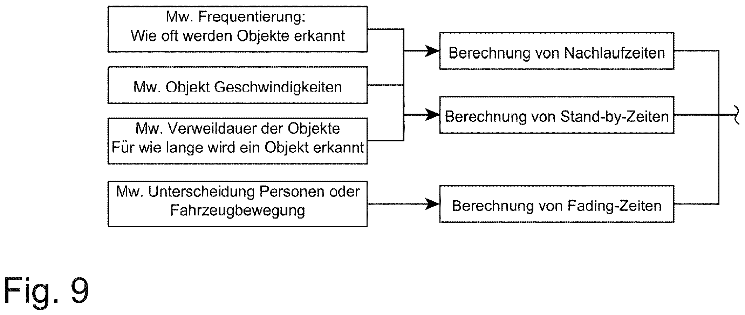

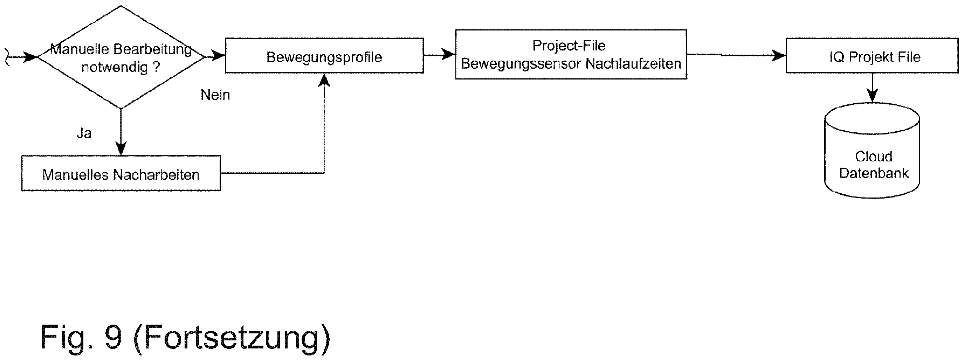

In Figur 9 ist ein Beispiel gezeigt, wie eine Parametrisierung im Hinblick auf Nachlaufzeiten, Standby-Zeiten und Fading-Zeiten an Beleuchtungskomponenten erfolgen kann. Dazu werden aus Bewegungssensoren die Art der Objekte, die Geschwindigkeit der Objekte, die Verweildauer der Objekte an einem Ort und Unterscheidung zwischen Personen- und Fahrzeugbewegungen erfasst. Aus den Daten können Nachlaufzeiten, Standby-Zeiten und Fading-Zeiten berechnet werden, sowie entschieden werden, ob eine manuelle Änderung der Parametrisierung notwendig ist. Die ermittelten und ggf. manuell nachbearbeiteten Parametrisierungen werden in dem Projekt-File abgelegt.

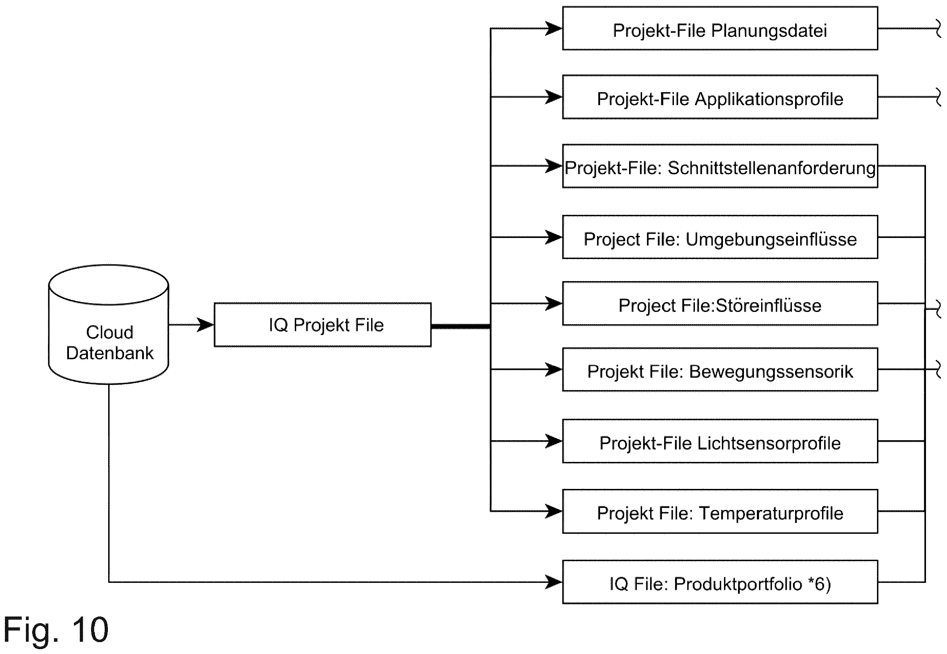

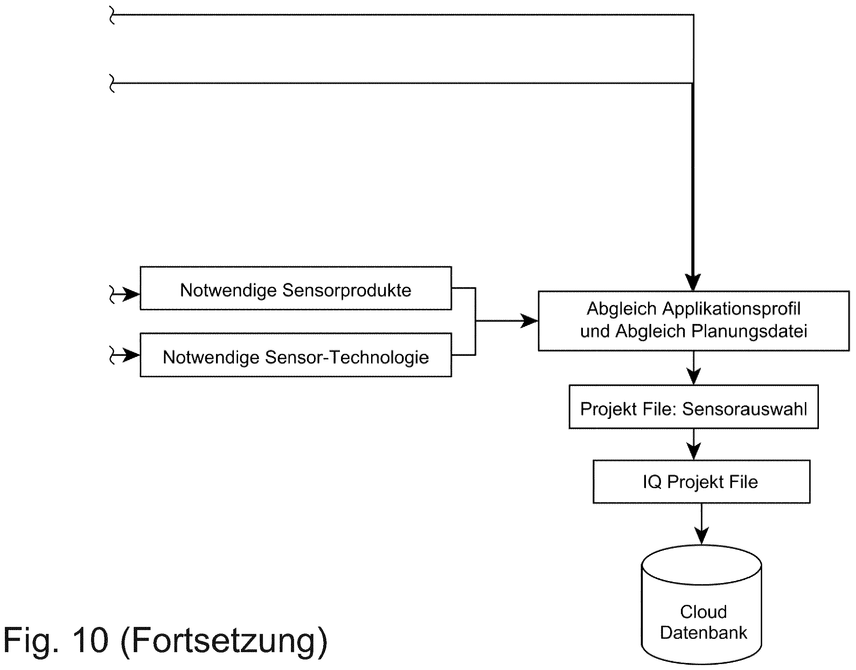

Figur 10 zeigt ein Beispiel, wie aus dem Projekt-File ermittelt werden kann, ob Änderungen an der installierten Sensorik vorgenommen werden sollen. Es werden die aus der Planung im Projekt-File abgelegten Daten analysiert, um eine Auswahl der Sensoren z.B. für Umgebungseinflüsse, Störeinflüsse, Bewegungssensoren, Lichtsensorprofile und Temperaturprofile ermittelt und die notwendigen Sensorprodukte ausgewählt. Diese werden abgeglichen mit den in der Planungsdatei des Projekt-Fils vorhandenen Daten, um eine Sensorauswahl zu treffen.

Mögliche Anwendung finden das Verfahren, das Computerprogramm und das Netzwerk der Erfindung in vielen Bereichen. Die Netzwerkkomponenten lassen sich an vielen Orten verbauen, z.B. an oder in einer anderen Komponente einer Gebäudeinstallation, in einer Abhängdecke, einer Betondecke, einer Leuchtbauwand, im Erdreich oder Beton. Als Gebäude in dieser Anmeldung werden jede Form von Bauwerken bezeichnet, einschließlich Wohn- und Bürohäusern, Produktionshallen sowie Straßen und Wege. Der Einsatzbereich kann die Sanierung von Bestandsanlagen oder den Neubau betreffen. Die Komponenten können innerhalb der Gebäude oder im Außenbereich der Gebäude verbaut werden.

## Patentansprüche

1. Verfahren zur computergestützten Auswertung von Bedarfs- und Aufzeichnungsdaten einer Gebäudeinstallation, insbesondere einer Beleuchtungsanlage, umfassend vor Einrichtung einer Gebäudeinstallation Erhebung von Planungsdaten für die Gebäudeinstallation, wobei die Planungsdaten über eine Benutzerschnittstelle geführt abgefragt werden und zusätzlich Sensormessungen in dem Planungsstadium vorgenommen werden;
Ermitteln von Spezifikationen der Gebäudeinstallation aus den Planungsdaten;
nach Einrichten der Gebäudeinstallation, Aufzeichnen von Sensordaten aus Sensoren, welche Bestandteile der Gebäudeinstallation sind; und
Analysieren der Sensordaten zum Feststellen, ob die ermittelten Spezifikationen bei Betreiben der Gebäudeinstallation eingehalten werden.

2. Verfahren nach Anspruch 1, wobei die Sensoren wenigstens einige der folgenden Messdaten erheben:
Umgebungsbedingungen, insbesondere Temperatur, Feuchtigkeit und/oder mechanische Erschütterung;
Beleuchtungsstärke, insbesondere die durch Tageslicht und/oder künstliches Licht erzeugte Beleuchtungsstärke;
Bewegungsdaten von Personen und Kraftfahrzeugen, die sich im Bereich der Gebäudeinstallation aufhalten;
Stabilität eines Versorgungsnetzwerkes; und
Signalqualität von Datenkommunikationseinrichtungen.

3. Verfahren nach einem der vorhergehenden Ansprüche, wobei das Analysieren ein Vergleichen von mit dem Sensor erhobenen Umgebungsbedingungen mit einem in den Planungsdaten für den betreffenden Ort des Sensors spezifizierten maximalen Bereich der entsprechenden Umgebungsbedingungen umfasst.

4. Verfahren nach einem der vorhergehenden Ansprüche, wobei das Analysieren ein Vergleichen des Energieverbrauchs der Gebäudeinstallation oder Teilen von dieser mit einem in den Planungsdaten spezifizierten maximalen Energieverbrauch der Gebäudeinstallation oder der betreffenden Teile der Gebäudeinstallation umfasst.

5. Verfahren nach einem der vorhergehenden Ansprüche, wobei das Analysieren ein Feststellen einer Fehlfunktion einer Komponente der Gebäudeinstallation, insbesondere einen Ausfall einer Komponente der Gebäudeinstallation, umfasst.

6. Verfahren nach einem der vorhergehenden Ansprüche, wobei das Verfahren nach dem Analysieren vorsieht, eine elektronische Benachrichtigung zu erzeugen, welche an einen Betreiber der Gebäudeinstallation, an einen Hersteller der Gebäudeinstallation und/oder an einen Servicetechniker für die Gebäudeinstallation versendet wird.

7. Verfahren nach Anspruch 6, wobei die elektronisch erzeugte Nachricht an den Betreiber, Hersteller und Servicetechniker jeweils unterschiedliche Inhalte aufweist.

8. Verfahren nach Anspruch 6 oder 7, wobei wenigstens eine der elektronischen Benachrichtigungen eine Empfehlung für den Austausch einer Komponente der Gebäudetechnik und/oder eine Veränderung eines Serviceintervalls einer Komponente der Gebäudetechnik umfasst.

9. Verfahren nach Anspruch 8, wobei die Benachrichtigung eine Identifikation des Typs und/oder des Ortes der betreffenden Komponente umfasst.

10. Verfahren nach einem der Ansprüche 6 bis 9 mit Rückbezug auf Anspruch 3, wobei die Benachrichtigung einen Hinweis darauf umfasst, dass ein Sensor wenigstens zeitweise eine Abweichung der gemessenen Umgebungsbedingungen von dem in den Planungsdaten spezifizierten maximalen Bereich umfasst.

11. Verfahren nach einem der vorhergehenden Ansprüche, wobei das Analysieren eine statistische Analyse von Sensordaten umfasst, um das Auftreten von Messdaten außerhalb einer statistischen Bandbreite festzustellen.

12. Verfahren nach Anspruch 11, wobei das Analysieren der statistischen Abweichungen einen Selbstlernprozess beinhaltet, so dass eine der statistischen Auswertung zu Grunde gelegte Bandbreite über den laufenden Betrieb der Gebäudeinstallation auf Grundlage der vorhergehenden Messdaten angepasst wird.

13. Verfahren nach einem der vorhergehenden Ansprüche, wobei die Planungsdaten, die Spezifikationen, die Sensordaten, die Ergebnisse des Analysierens und/oder bei Rückbezug auf einen der Ansprüche 6 bis 12 die versandten Benachrichtigungen in einem einzelnen Datenfile gespeichert werden.

14. Computerprogramm, welches Anweisungen umfasst, die, wenn sie auf einem Computer ausgeführt werden, ein Verfahren nach einem der vorhergehenden Ansprüche durchführt.

15. Elektronische Vorrichtung, die dazu eingerichtet ist, ein Verfahren nach einem der Ansprüche 1 bis 13 durchzuführen.

## Claims

1. Method for computer-aided evaluation of demand and recording data of a building installation, in particular of a lighting system, comprising
prior to setting up a building installation, collecting planning data for the building installation, wherein the planning data are queried in a guided manner via a user interface and additionally sensor measurements are performed at the planning stage;
determining specifications of the building installation from the planning data;
after setting up the building installation, recording sensor data from sensors which are components of the building installation; and
analyzing the sensor data in order to ascertain whether the determined specifications are complied with when operating the building installation.

2. Method according to claim 1, wherein the sensors collect at least some of the following measurement data:
ambient conditions, in particular temperature, humidity and/or mechanical vibration;
illuminance, in particular the illuminance generated by daylight and/or artificial light; movement data of persons and motor vehicles which are located in the region of the building installation;
stability of a supply network; and
signal quality of data communication devices.

3. Method according to one of the preceding claims, wherein the analyzing comprises comparing ambient conditions collected with the sensor with a maximum range of the corresponding ambient conditions specified in the planning data for the relevant location of the sensor.

4. Method according to one of the preceding claims, wherein the analyzing comprises comparing the energy consumption of the building installation or parts thereof with a maximum energy consumption of the building installation or of the relevant parts of the building installation specified in the planning data.

5. Method according to one of the preceding claims, wherein the analyzing comprises ascertaining a malfunction of a component of the building installation, in particular a failure of a component of the building installation.

6. Method according to one of the preceding claims, wherein the method provides, after the analyzing, to generate an electronic notification which is sent to an operator of the building installation, to a manufacturer of the building installation and/or to a service technician for the building installation.

7. Method according to Claim 6, wherein the electronically generated message to the operator, manufacturer and service technician has different contents in each case.

8. Method according to Claim 6 or 7, wherein at least one of the electronic notifications comprises a recommendation for the exchange of a component of the building technology and/or a change in a service interval of a component of the building technology.

9. Method according to Claim 8, wherein the notification comprises an identification of the type and/or the location of the relevant component.

10. Method according to one of Claims 6 to 9 with reference back to Claim 3, wherein the notification comprises an indication that a sensor at least temporarily comprises a deviation of the measured ambient conditions from the maximum range specified in the planning data.

11. Method according to one of the preceding claims, wherein the analyzing comprises a statistical analysis of sensor data in order to establish the occurrence of measurement data outside a statistical bandwidth.

12. Method according to Claim 11, wherein the analyzing of the statistical deviations includes a self-learning process, with the result that a bandwidth on which the statistical evaluation is based is adapted via the ongoing operation of the building installation on the basis of the preceding measurement data.

13. Method according to one of the preceding claims, wherein the planning data, the specifications, the sensor data, the results of the analyzing and/or when referring back to one of Claims 6 to 12, the notifications sent are stored in a single data file.

14. Computer program which comprises instructions which, when executed on a computer, carries out a method according to one of the preceding claims.

15. Electronic device which is configured to carry out a method according to one of Claims 1 to 13.

## Revendications

1. Procédé d'analyse assistée par ordinateur de données relatives aux besoins et d'enregistrement d'une installation de bâtiment, plus particulièrement d'une installation d'éclairage, comprenant
avant la création d'une installation de bâtiment, saisie de données de planification pour l'installation de bâtiment, dans lequel les données de planification sont demandées de manière guidée par l'intermédiaire d'une interface utilisateur et des mesures par capteurs sont en outre effectuées dans le stade de planification ;
détermination de spécifications de l'installation de bâtiment à partir des données de planification ;
après la création de l'installation de bâtiment, enregistrement de données de capteurs provenant de capteurs qui font partie intégrante de l'installation de bâtiment ; et
analyse des données des capteurs pour déterminer si les spécifications déterminées lors de l'exploitation de l'installation de bâtiment sont respectées.

2. Procédé selon la revendication 1, dans lequel les capteurs relèvent au moins certaines des données de mesures suivantes :
conditions environnementales, plus particulièrement température, humidité et/ou secousses mécaniques ;
intensité de l'éclairage, plus particulièrement l'intensité d'éclairage générée par la lumière du jour et/ou la lumière artificielle ;
données de mouvement de personnes et de véhicules automobiles, qui se trouvent dans le domaine de l'installation de bâtiment ;
stabilité d'un réseau d'alimentation ; et
qualité du signal de dispositifs de communication de données.

3. Procédé selon l'une des revendications précédentes, dans lequel l'analyse comprend une comparaison des conditions environnementales correspondantes relevées avec le capteur avec une plage maximale spécifiée dans les données de planification, pour le lieu concerné du capteur.

4. Procédé selon l'une des revendications précédentes, dans lequel l'analyse comprend une comparaison de la consommation d'énergie de l'installation de bâtiment ou de parties de celle-ci avec une consommation d'énergie maximale de l'installation de bâtiment ou des parties concernées de l'installation de bâtiment, spécifiée dans les données de planification.

5. Procédé selon l'une des revendications précédentes, dans lequel l'analyse comprend une détection d'un dysfonctionnement d'un composant de l'installation de bâtiment, plus particulièrement une panne d'un composant de l'installation de bâtiment.

6. Procédé selon l'une des revendications précédentes, dans lequel le procédé prévoit, après l'analyse, la génération d'une notification électronique qui est envoyée à un exploitant de l'installation de bâtiment, à un fabricant de l'installation de bâtiment et/ou à un technicien de maintenance de l'installation de bâtiment.

7. Procédé selon la revendication 6, dans lequel les messages électroniques respectifs envoyés à l'exploitant, au fabricant et au technicien de maintenance présentent des contenus différents.

8. Procédé selon la revendication 6 ou 7, dans lequel au moins une des notifications électroniques comprend une recommandation du remplacement d'un composant du système du bâtiment et/ou de la modification d'un intervalle de maintenance d'un composant du système du bâtiment.

9. Procédé selon la revendication 8, dans lequel la notification comprend une identification du type et/ou du lieu du composant concerné.

10. Procédé selon l'une des revendications 6 à 9, en référence à la revendication 3, dans lequel la notification comprend une indication qu'un capteur présente, au moins temporairement, un écart des conditions environnementales mesurées par rapport à la plage maximale spécifiée dans les données de planification.

11. Procédé selon l'une des revendications précédentes, dans lequel l'analyse comprend une analyse statistique des données de capteurs, afin de détecter l'apparition de données de mesure hors d'une largeur de bande statistique.

12. Procédé selon la revendication 11, dans lequel l'analyse des écarts statistiques contient un processus d'auto-apprentissage, de sorte qu'une largeur de bande basée sur l'analyse statistique soit adaptée, au cours de l'exploitation de l'installation de bâtiment, sur la base des données de mesures précédentes.

13. Procédé selon l'une des revendications précédentes, dans lequel les données de planification, les spécifications, les données de capteurs, les résultats de l'analyse et/ou, en référence à l'une des revendications 6 à 12, les notifications envoyées sont enregistrées dans un seul fichier de données.

14. Programme informatique, qui comprend des instructions qui, lorsqu'elles sont exécutées sur un ordinateur, exécutent un procédé selon l'une des revendications précédentes.

15. Dispositif électronique qui est conçu pour exécuter un procédé selon l'une des revendications 1 à 13.
